# EUROPÄISCHE PATENTSCHRIFT

(11) **EP 1 440 022 B1**
(45) Veröffentlichungstag und Bekanntmachung des Hinweises auf die Patenterteilung: **01.03.2006**
(21) Anmeldenummer: 02787516.0
(22) Anmeldetag: 28.10.2002
(51) Int. Cl.: B65G 9/00

(54) **MEHRWANDIGES, FLEXIBLES BEHÄ LTNIS SOWIE CONTAINER MIT EINSTELLBARER SCH ÜTTGUTFALLGESCHWINDIGKEIT**
MULTI-WALLED FLEXIBLE RECEPTACLE AND CONTAINER WITH ADJUSTABLE BULK GOODS FALLING SPEED
CONTENANT FLEXIBLE A PLUSIEURS PAROIS ET CONTENEUR AVEC VITESSE DE CHUTE REGLABLE D'UN PRODUIT EN VRAC

(30) Priorität: 31.10.2001 DE 20117787 U
(43) Veröffentlichungstag der Anmeldung: 28.07.2004
(73) Patentinhaber: GEA Buck Valve GmbH, 79379 Müllheim (DE)
(72) Erfinder: KOCH, Martin, 79395 Neuenburg (DE); HEATH, Gary, Tamworth, Staffs B77 5FZ (GB); MOLLER, Klaus, Winchester, Hampshire SO21 2OU (GB)
(74) Vertreter: Weber-Bruls, Dorothée
(86) Internationale Anmeldenummer: PCT/EP2002/012011
(87) Internationale Veröffentlichungsnummer: WO 2003/037756

(56) Entgegenhaltungen:
- EP-A- 0 554 096
- DE-A- 4 329 356
- DE-C- 4 041 706
- FR-A- 1 424 361
- FR-A- 2 699 153
- US-A- 3 464 594
- US-A- 4 574 984
- US-A- 4 904 127
- US-A- 5 082 236

## Beschreibung

Die Erfindung betrifft ein mehrwandiges, flexibles Behältnis sowie einen Container mit einem an der Containeroberseite angeordneten, insbesondere verschließbaren, Einlaß, über den der Container schwerkraftgetrieben mit Schüttgut befüllbar ist, einem dem Einlaß gegenüberliegenden, verschließbaren Auslaß an der Containerunterseite und einer Schutzfolie, die die Innenwände des Containers gegenüber dem einzufüllenden Schüttgut schützt. Ferner betrifft die Erfindung ein Verfahren zum Befüllen und Entleeren von besagten Behältnissen und Containern sowie deren Verwendung zur Aufnahme, Abgabe, zum Transport und/oder Lagern von Schüttgut.

Insbesondere in der pharmazeutischen Industrie werden in einer Preßform erzeugte Tabletten zur Lagerung oder zum Transport in Container gefüllt. Dabei ist während der Befüllung darauf zu achten, daß die Tabletten, also Preßlinge, nicht beschädigt werden. Zu diesem Zwecke ist unter anderem versucht worden, die maximale Fallhöhe der Tabletten auf ca. 20cm zu reglementieren.

Aus der US 4,904,127 ist beispielsweise eine pneumatisch arbeitende Transportvorrichtung bekannt, die granulare oder Pulvermaterialien mittels Druckluft durch ein Rohrsystem befördert. Dabei kann über den Druck der Druckluft die Fördergeschwindigkeit geregelt werden.

Der DE 40 41 706 C1 ist eine pneumatisch arbeitende Beförderungsvorrichtung zu entnehmen, in der Tabletten in einem Rohr gegen einen Luftstrom langsam sinken und einem Container zugeführt werden.

Die US 4,574,984 beschreibt ein Silobehältnis zum Lagern sowie zur Zurverfügungsstellung von Schüttgut, bei dem die schwerkraftgetriebene Entleerung durch eine an der Innenwand des Silos vorliegende flexible Membran unterstützt werden kann. Wesentlich ist hierbei, daß diese flexible Membran am Auslassende mit einem Klemmring befestigt wird, der mittels einer Vielzahl an Auswölbungen Faltenbildung der Membran verhindern hilft.

Nachteilig ist bei dem oben beschriebenen Stand der Technik, daß ein kontinuierlicher Fluß von Druckluft zur Beförderung von Tabletten aufrecht erhalten werden muß, was sich letztendlich in erhöhten finanziellen Aufwendungen niederschlägt.

Ein im wesentlichen rohrförmiges bzw. schachtförmiges Produktabbremssystem der Firma Niro Pharma Systems, wie in dem Produkt "Gallay Systems - Intermediate Bulk Containers - Powder Handling Systems" von 2001 beschrieben, hat sich zur schonenden Tablettenförderung bewährt. Dabei handelt es sich um eine pneumatische Vorrichtung, in der Tabletten einem Container durch einen Schacht zugeführt werden, der mit einem flexiblen Kunststoffschlauch so ausgekleidet ist, daß zwischen den Schachtwänden und dem Kunststoffschlauch eingelassene Druckluft zu einer Verengung des Schachtquerschnitts aufgrund einer Einschnürung des Kunststoffschlauches führt, wodurch die Tabletten in einer sich bildenden Tasche aufgefangen werden. Wenn der durch die in der Tasche aufgefangenen Tabletten verursachte Schweredruck den Druck der Druckluft innerhalb des Schachts übersteigt, beginnen die Tabletten, von der Kunststoffolie umhüllt, zu sinken. Durch eine Drucksteuerung kann die Sinkgeschwindigkeit der Tabletten gesteuert werden. Diese Vorrichtung kann als Zubehör einer Entladestation oder als eigenständige Apparatur ausgeführt sein. Obwohl mit dieser Vorrichtung zwar größere Entfernungen zum Befördern von Tabletten von einem ersten Container zu einem zweiten Container überbrückt werden können, ist nachteilig, daß sie sich nicht zum direkten Befüllen eines Containers mit großem Füllvolumen von 30 bis 2000 Litern eignet, da diese Container im allgemeinen Fallstrecken von mehr als 20cm aufweisen. Zudem ist die bekannte Vorrichtung in ihrem Aufbau aufgrund der Notwendigkeit eines zwischen zwei Containern zwischenzuschaltenden Schachts komplex sowie störanfällig.

Aufgabe der vorliegenden Erfindung ist es daher, Behältnisse zur Verfügung zu stellen, die nicht mit den Nachteilen des Standes der Technik behaftet sind und insbesondere ein schonendes Befüllen mit Schüttgut sowie ein effizientes Entleeren ermöglichen, sowie den gattungsgemäßen Container derart weiterzuentwickeln, daß die Nachteile des Standes der Technik überwunden werden, insbesondere ein direktes Befüllen eines Containers bei gleichzeitiger Minimierung des Ausschusses durch ein schonendes Einbringen von Tabletten kostengünstig zu ermöglichen.

Diese Aufgabe wird erfindungsgemäß gelöst durch ein mehrwandiges Umkehrbehältnis gemäß Anspruch 1 sowie durch ein mehrwandiges Durchlaufbehältnis gemäß Anspruch 2.

Demgemäß wird mit der vorliegenden Erfindung ein Behältnis zum Transportieren und Umfüllen von Schüttgut zur Verfügung gestellt, das im entleerten Zustand auf eine sehr geringe Größe gebracht werden kann und sich daher platzsparend und ohne größeren Aufwand transportieren läßt. Gleichwohl ist ein kontaminationsfreies sicheres Be- und Umfüllen sowie Entleeren von gefährlichem Schüttgut gewährleistet. Folglich müssen fortan nicht mehr schwere, solide Stahlbehälter bewegt werden, sofern dieses überhaupt möglich ist, sondern es kann unabhängig von der Größe des zu befüllenden oder zu entleerenden Schüttgutbehältnisses stets der jeweils optimale Ort zum Befüllen bzw. Entleeren ausgewählt werden. Des weiteren lassen sich erst die erfindungsgemäßen Behältnisse besonders einfach mit bzw. in Containern verwenden, um ein direktes Befüllen des Containers durch schonendes Einbringen des Schüttguts kostengünstig und unter gleichzeitiger Minimierung von Ausschuss zu ermöglichen. Von Vorteil ist ferner, daß Container und Behältnis zunächst separat gehandhabt, zum Beispiel transportiert und/oder vorbereitet werden können und erst am Ort des Befüllens bzw. Entleerens miteinander zu kombinieren sind. Hierdurch werden die Freiheitsgrade des Nutzers merklich erhöht, ist doch z.B. nicht mehr für jeden Container stets ein entsprechendes Behältnis vorzuhalten, oder umgekehrt. Von Vorteil ist weiterhin, daß auch die mit den erfindungsgemäßen Behältnissen ausstattbaren Container platzsparend zerlegt, gelagert bzw. gestapelt werden können, wodurch sich ebenfalls deren Transport und Lagerung effizient und kostengünstig gestalten läßt.

Unter Umkehrbehältnissen oder -containern werden im allgemeinen solche Gebinde verstanden, die über ein und dieselbe Öffnung befüll- und entleerbar sind. Befindet sich die Öffnung beim Befüllen auf der Oberseite, wird durch Drehen des Behältnisses die Öffnung auf die Unterseite gebracht. Die innere wie auch die äußere flexible Behältniswand können einstückig gebildet oder aus zwei oder mehreren Behältniswandelementen aufgebaut sein. Sie umgrenzen regelmäßig ein bestimmtes, abgeschlossenes Volumen. Innere und äußere Behältniswand können demgemäß auch als inneres bzw. äußeres Behältnis oder als innere bzw. äußere Hülle bezeichnet werden, verfügen sie doch regelmäßig nur über eine Öffnung für einen Einlaß und gegebenenfalls auch einen Auslaß. Die äußere Behältniswand kann des weiteren regelmäßig auch mit einer Aufnahmeöffnung für einen Druckstutzen ausgestattet sein.

Beispielsweise kann die innere Behältniswand aus einer Polyethylenfolie, insbesondere aus LD-PE, bestehen. Vorzugsweise kann in einer Ausführungsform auch auf sortenreine mehrwandige Behältnisse zurückgegriffen werden, beispielsweise indem die äußere Behältniswand ebenfalls aus einer Polyethylenfolie gefertigt ist, dann allerdings vorzugsweise in einer größeren Dicke bzw. Steifigkeit als die innere Behältniswand, z.B. in einer Dicke von 1 bis 2 mm. Die äußere Behältniswand kann des weiteren aus einem Gewebe gefertigt sein, z.B. aus Polyethylen- Polypropylen- und/oder Polyamidfasern. Zur Erhöhung der Luftdichtigkeit können diese Gewebe innen- und/oder außen auch beschichtet sein. Ferner kann die äußere Behältniswand ein relativ steifes gummielastisches Material umfassen.

In einer weiteren erfindungsgemäßen Ausführungsform ist die äußere Behältniswand durch, insbesondere umlaufende, Gewebeeinsätze und/oder aufgeklebte oder eingearbeitete Areale, Streifen oder Bänder stabilisiert. Auch können von außen Gurte angelegt oder befestigt werden.

Die innere und die äußere Behältniswand sind insbesondere im Bereich der Ein- und/oder Auslässe miteinander verschweißt, z.B. heiß-, laser- oder vibrationsverschweißt.

Erfindungsgemäße Behältnisse können des weiteren mindestens eine Haltevorrichtung, insbesondere im oberen Bereich der Seitenwand und/oder an der Oberseite des Behältnisses aufweisen.

Ferner kann erfindungsgemäß vorgesehen sein, daß die innere Behältniswand, insbesondere die Innenhülle, ohne Druckluft in dem Zwischenraum zwischen der inneren Behältniswand und der äußeren Behältniswand dieselbe vollständig bedeckt. Dabei kann die innere Behältniswand ein Volumen umgrenzen, das größer ist als das durch die äußere Behältniswand umgrenzte.

Gemäß einer Ausführungsform der Erfindung ist bzw. sind die innere und/oder die äußere Behältniswand luftdicht mit dem Einlaß sowie dem Auslaß verbindbar.

Erfindungsgemäß wird ferner vorgeschlagen, daß die innere Behältniswand mindestens einen Kunststoff, vorzugsweise einen lebensmittelechten Kunststoff, umfaßt.

Weiterhin ist die Erfindung gekennzeichnet durch eine Steuer- und/oder Regeleinrichtung in Verbindung mit einer Druckluftzuleitung zu dem Zwischenraum zwischen der inneren Behältniswand und der äußeren Behältniswand.

Ferner zeichnet sich die Erfindung aus durch zumindest einen Sensor insbesondere zur Erfassung des Füllstands und/oder der Füllgeschwindigkeit des Behältnisses, vorzugsweise in Wirkverbindung mit der Steuer- und/oder der Regeleinrichtung.

Überdies kann eine Klappenanordnung am Einlaß und/oder am Auslaß des Behältnisses, vorzugsweise in Wirkverbindung mit dem Sensor und/oder der Steuer- und/oder Regeleinrichtung vorgesehen sein.

Gemäß einem weiteren Aspekt der Erfindung wird die der Erfindung zugrundeliegende Aufgabe auch durch Container, insbesondere nicht geschlossene Container gelöst, die mindestens ein erfindungsgemäßes Behältnis enthalten. Diese Container können als Umkehr- oder Durchlaufcontainer konzipiert sein in Abhängigkeit davon, ob die erfindungsgemäßen Behältisse nur über eine Einlaß bzw. eine separate Einlaß- und Auslaßöffnung verfügen. Unter einem nicht geschlossenen Container im Sinne der vorliegenden Erfindung ist ein solcher zu verstehen, der nicht auf einfache Weise, z.B. durch Verschließen einer Einlaß- und oder Auslaßöffnung, mit Druck beaufschlagt werden kann. Nicht geschlossene Container verfügen demgemäß z.B. über Durchlässe oder eine Vielzahl an nicht auf einfache Weise verschließbaren Öffnungen, auch können Begrenzungselemente, wie z.B. eine Seitenwand, vollständig fehlen. Demgegenüber zeichnen sich geschlossene Container im Sinne der Erfindung dadurch aus, daß sie ein bestimmtes Volumen physikalisch umgrenzen, wobei das Containerinnere einem Druck ausgesetzt werden kann und der Container in der Lage ist, diesen Druck über einen längeren Zeitraum zu halten.

Diese erfindungsgemäßen Container sind, sobald das erfindungsgemäße Behältnis entfernt worden ist, vorzugsweise zerlegbar, faltbar, stapelbar und/oder zusammenklappbar und/oder stellen ein Haltegerüst bzw. -korsett oder einen nach oben offenen Kasten, insbesondere mit einem Durchgang zur Aufnahme eines Behältnisauslasses auf der Unterseite, dar. Dieser erfindungsgemäße Container kann in einer Ausführungsform z.B. eine Bodenplatte und mindestens zwei beabstandete, vertikale Streben oder Stützen umfassen. Ferner kann eine Bodenplatte oder ein Bodengerüst auch mit zwei gegenüberstehenden oder drei oder mehr, eine Fläche umgrenzenden Seitenflächen bestückt sein, so daß das erfindungsgemäße Behältnis von der Seite oder von oben in den Container einführbar ist. Vorteilhafterweise sind an den Streben oder Seitenwänden Halteelemente, z.B. Schlaufen oder Ösen, zur, insbesondere reversiblen, Fixierung des erfindungsgemäßen Behältnisses vorgesehen. Obige Container lassen sich, wenn nicht mit einem erfindungsgemäßen Behältnis ausgestattet, einfach zerlegen und/oder auf platzsparende Weise lagern bzw. stapeln. Diese Container können beispielsweise aus Metall, insbesondere Edelstahl, und/oder Kimststoff, insbesondere aus spritzgegossenen Formteilen, gefertigt sein.

Dabei kann besagtes Behältnis, insbesondere lösbar, mit dem Container, insbesondere mindestens einer Containerwand oder Containerkorsettstrebe oder Containerstütze, verbindbar oder verbunden sein, vorzugsweise über eine Haltevorrichtung im oberen Bereich des Behältnisses.

Wird der Zwischenraum zwischen den flexiblen inneren und äußeren Behältniswänden mit Druck beaufschlagt, nimmt die äußere Behältniswand regelmäßig ein durch die Dimension dieser Außenhülle vorgegebenes Volumen ein. Dabei hat es sich als vorteilhaft erwiesen, das Material der äußeren Behältniswand steifer und reißfester auszuführen als das der inneren Behältniswand, insbesondere wenn ohne einen Container gearbeitet wird. Befindet sich das erfindungsgemäße Behältnis in einem nicht geschlossenen Container ist es regelmäßig von Vorteil, die Seitenwände oder -streben bzw. das Seitenstützkorsett derart zu dimensionieren, daß die unter Druck befindliche äußere Behältniswand sich an den- bzw. demselben zumindest bereichsweise abstützt.

Gemäß einem weiteren Aspekt der vorliegenden Erfindung weist mindestens ein Einlaß und/oder mindestens ein Auslaß eines erfindungsgemäßen Behältnisses oder eines erfindungsgemäßen Containers ein Kopplungselement zum umweltisolierten Befüllen und/oder Entleeren von Behältnissen auf, das fest oder lösbar und im wesentlichen umweltisoliert auf einer ersten Seite, insbesondere der Unterseite, mit mindestens einem zumindest bereichsweise im wesentlichen flexiblen Behältnis verbunden oder verbindbar ist, wobei das Kopplungselement zumindest bereichsweise elastisch verformbar ist und eine zweite Seite, insbesondere eine Oberseite, aufweist, die an eine zweite Seite, insbesondere eine Oberseite, eines zweiten Kopplungselements im wesentlichen dicht und insbesondere reversibel andockbar ist, wobei das besagte Kopplungselement im Grundzustand verschlossen und unter elastischer Verformung, insbesondere über mindestens ein Schlitz, reversibel öffenbar ist, so daß ein Durchgang von der ersten zur zweiten Seite des Kopplungselements vorliegt.

Dabei kann vorgesehen sein, daß die Oberseite des Kopplungselements mindestens eine kontinuierlich umlaufende axiale Erhebung aufweist, die über den gesamten Umfang zur, insbesondere dichten, Anlage mit einem zweiten Kopplungselement bringbar ist.

Ferner kann vorgesehen sein, daß die umlaufende axiale Erhebung und eine Umrandung oder Begrenzung des öffenbaren Durchgangs oder Schlitzes auf der Oberseite des Kopplungselement zur, insbesondere dichten, Anlage mit der Oberseite eines zweiten, anzudockenden Kopplungselements, bringbar sind, wobei insbesondere zumindest die umlaufende axiale Erhebung der Oberseite des ersten Kopplungselements mit der umlaufenden axialen Erhebung der Oberseite des zweiten Kopplungselements und die Umrandung oder Begrenzung des öffenbaren Durchgangs oder Schlitzes der Oberseite des ersten Kopplungselements mit der Umrandung oder Begrenzung des öffenbaren Durchgangs oder Schlitzes der Oberseite des zweiten Kopplungselements zur, insbesondere dichten, Anlage bringbar sind.

In einer Ausführungsform verfügt das Kopplungselement über eine im wesentlichen axiale Führungseinrichtung, insbesondere einen kontinuierlich umlaufenden oder diskontinuierlichen axialen Randsteg, an der Oberseite des besagten Kopplungselements, insbesondere an der umlaufenden axialen Erhebung, zur Ausbildung eines dichten, festsitzenden und/oder arretierbaren Abschlusses mit einem andockbaren zweiten Kopplungselement.

Eine weitere Ausführungsform zeichnet sich aus durch zumindest eine Führungseinrichtung, umfassend mindestens eine Nut oder Aussparung oder mindestens einen Steg oder Vorsprung, insbesondere im Bereich mindestens einer die Ober- und Unterseite verbindenden Seitenfläche, zum Angreifen an ein zweites Kopplungselement und/oder eine Verschließeinrichtung.

Vorteilhafterweise verfügt zumindest eine Seite des Kopplungselements, insbesondere die zum umweltisolierten Andocken an ein zweites Kopplungselement vorgesehene zweite Seite, wenigstens bereichsweise ein Haftmittel und/oder einen Kleber, insbesondere eine Haft- und/oder Klebeschicht, aufweist.

Eine Ausführungsform zeichnet sich dadurch aus, daß der periphere Randbereich der Aufnahmeöffnung des flexiblen Behältnisses auf der ersten Seite des Kopplungselements dicht mit dem Umfangsrand, insbesondere den im Grundzustand dicht aneinander anliegenden Wandungen, des Durchgangs zumindest benachbart zur ersten Seite, mit der Fläche der ersten Seite oder mit den die erste und zweite Seite verbindenden Seiten, mit oder ohne Zuhilfenahme eines Klemmgurts oder -gummis, verbunden oder verbindbar ist.

Schließlich kann mindestens ein mit einem Kopplungselement umweltisoliert verbundenes, insbesondere transluzentes oder transparentes, flexibles Behältnis, mindestens eine Entnahmevorrichtung, insbesondere in Form eines Löffels, Spatels oder, insbesondere verschließbaren, Behältnisses, enthalten.

Dabei kann vorgesehen sein, daß die Entnahmevorrichtung bereichsweise, insbesondere an einem hinteren oder unteren Ende, mit dem flexiblen Behältnis verbindbar oder verbunden ist.

Die der Erfindung in Bezug auf ein Verfahren zum schonenden Befüllen von erfindungsgemäßen Behältnissen zugrundeliegende Aufgabewird erfindungsgemäß dadurch gelöst, daß man Schüttgut über mindestens einen an der Oberseite eines Behältnisses angeordneten, insbesondere verschließbaren, Einlaß einfüllt in ein mehrwandiges, eine flexible und luftdichte innere und äußere Behältniswand umfassendes Behältnis, wobei man die Fallgeschwindigkeit und/oder Falltiefe des Schüttgutes steuert und/oder regelt, indem man einen Zwischenraum zwischen einer inneren Behäitniswand und einer äußeren Behältniswand, insbesondere einer Innen- und einer Außenhülle, variierbar mit Druckluft beaufschlagt, wodurch der Querschnitt der inneren Behältniswand zur Reduktion der Fallgeschwindigkeit des Schilttguts von dem Einlaß zu der dem Einlaß gegenüberliegenden Seite des Behältnisses und/oder zu dem Auslaß zumindest bereichsweise eingestellt wird.

Dieses Verfahren eignet sich insbesondere auch für nicht geschlossene Container, die ein erfindungsgemäßes Behältnis enthalten. Die der vorliegenden Erfindung in Bezug auf das effiziente Entleeren eines mehrwandigen, eine flexible und luftdichte innere und äußere Behältniswand umfassenden Behältnisses oder eines besagte Behältnisse enthaltenden, nicht geschlossenen Containers, zugrundeliegenden Aufgabe wird erfindungsgemäB dadurch gelöst, daß man mindestens einen Auslaß und/oder Einlaß eines erfindungsgemäßen Behältnisses oder nicht geschlossenen Containers öffnet und die schwerkraftgetriebene Entleerung mittels Druckbeaufschlagung eines Zwischenraums zwischen einer inneren und einer äußeren flexiblen, luftdichten Behälterwand unterstützt.

Dabei kann in einer Ausführungsform vorgesehen sein, daß man während des schwerkraftgetriebenen Entleervorgangs den Zwischenraum zwischen der inneren und der äußeren Behältniswand periodisch, insbesondere kurzzeitig, mit Druck beaufschlagt.

Gemäß einer alternativen Verfahrensvariante kann man auch gegen Ende des Entleervorgangs oder bei oder nach Beendigung des schwerkraftgetriebenen Entleervorgaags den Zwischenraum zwischen der inneren und der äußeren Behältniswand, insbesondere kurzzeitig, mindestens einmal mit Druck beaufschlagen, so daß insbesondere letzte Schüttgutreste aus dem Behältnis entfernt werden. Diese Vorgehensweise eignet sich insbesondere um letzte Reste, die an der Innenwand anhaften oder sich in Falten der flexiblen Innenwand abgelegt haben, zu entfernen, wodurch kein Produkt verloren geht bzw. das flexible Innenbehältnis im wesentlichen unkontaminiert verbleibt.

Die erfindungsgemäßen Behältnisse und Container eigenen sich beispielsweise zur Aufnahme, zur Abgabe, zum Transport und/oder zum Lagern von Schüttgut.

Der Erfindung lag somit die Erkenntnis zugrunde, daß sich ebenfalls mehrwandige Behältnisse umfassend eine innere und eine benachbarte äußere flexible Behälterwand direkt schonend befüllen lassen. Hierbei kann vorzugsweise auf nicht geschlossene Container, enthaltend besagte mehrwandige Behältnisse, zurückgegriffen werden. Nicht geschlossene Container haben den Vorteil platzsparend zerlegt und/oder gelagert bzw. gestapelt werden zu können. Ferner wurde ein sehr schonendes Verfahren zum Befüllen mit Schüttgut gefunden sowie ebenfalls ein sehr effizientes Verfahren zum Entleeren von Schüttgutbehältnissen, daß dafür Sorge trägt, daß keine Rückstände im Behältnis verbleiben.

Weitere Merkmale und Vorteile der Erfindung ergeben sich aus der nachstehenden Beschreibung, in der erfindungsgemäße Ausführungsbeispiele anhand aus mehreren Figuren bestehenden, schematischen Zeichnungen im einzelnen erläutert sind. Dabei zeigt:
- Fig. 1: eine Längsschnittansicht durch einen nicht erfindungsgemäßen Container;
- Fig. 2: eine Längsschnittansicht durch eine alternative Ausführungsform eines nicht erfindungsgemäßen Containers;
- Fig. 3: eine Längsschnittansicht durch ein erfindungsgemäßes Behältnis;
- Fig. 4: eine Längsschnittansicht durch eine alternative Ausführungsform des erfindungsgemäßes Behältnisses;
- Fig. 5a): eine Längsschnittansicht durch eine Ausführungsform eines erfindungsgemäßen Containers;
- Fig. 5b): eine Längsschnittansicht durch eine alternative Ausführungsform des erfindungsgemäßes Containers;
- Fig. 6: eine perspektivische Darstellung eines Kopplungselements;
- Fig. 7: eine perspektivische Darstellung eines Kopplungselements mitsamt Verschließvorrichtung.
- Fig. 8: eine perspektivische Darstellung einer aus zwei Kopplungselementen gebildeten Andockeinrichtung und
- Fig. 9: eine perspektivische Darstellung eines alternativen Kopplungselements.

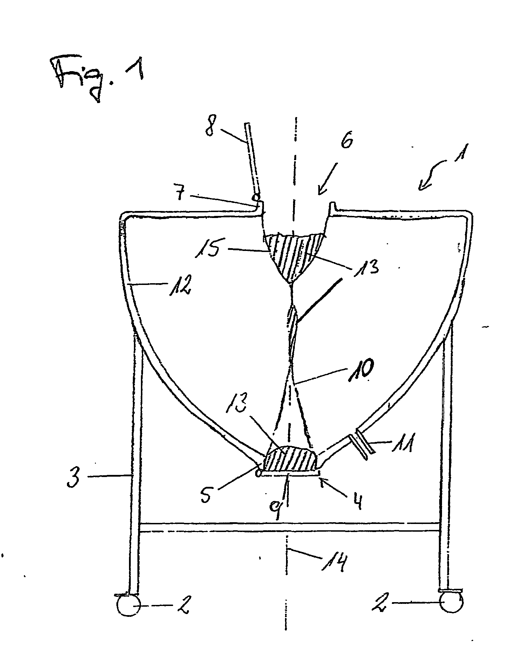

Wie der Figur 1 zu entnehmen ist, umfaßt ein nicht erfindungsgemäßer, trichterförmiger Container 1, der zu seiner Beweglichkeit auf einem mit Rollen 2 versehenen, fahrbaren Gestell 3 abnehmbar gelagert ist, an seinem konisch zulaufenden Ende einen Auslaß 4. Der Auslaß 4 ist durch einen am Container 1 befindlichen, unteren Flansch 5 ausgebildet, dem gegenüber ein Einlaß 6, ausgebildet durch einen oberen Flansch 7, angeordnet ist. Der Auslaß 4 sowie der Einlaß 6 sind jeweils durch eine Klappe, nämlich eine Eintrittsklappe 8 bzw. Austrittsklappe 9, verschließbar. Der Container 1 ist in seinem Inneren mit einer luftdichten, flexiblen, schlauchförmigen Kunststoffolie 10 ausgekleidet, die in ihrem Grundzustand die Innenwände 12 des Containers 1 vollständig bedeckt. Die Kunststoffolie 10 ist dabei im Bereich des Auslasses 4, zwischen dem unteren Flansch 5 und einem Absperrelement (nicht gezeigt), an dem die Austrittsklappe 9 montiert ist, und im Bereich des Einlasses 6, zwischen dem oberen Flansch 7 und einem weiteren Absperrelement (ebenfalls nicht dargestellt), an dem die Eintrittsklappe 8 montiert ist, befestigt. Die Absperrelemente sind beispielsweise an dem Container 1, insbesondere an dem unteren 5 bzw. oberen Flansch 7, angeklemmt. Gedichtet wird die Kunststoffolie 10 gegenüber dem Container 1 durch umlaufende Dichtelemente (nicht gezeigt), die einerseits zwischen der Kunststoffolie 10 und dem unteren Flansch 5 bzw. oberen Flansch 7 und andererseits zwischen der Kunststoffolie 10 und dem entsprechenden Absperrelement angeordnet sind. Zudem ist im unteren Bereich des Containers 1 eine Druckluftzuleitung 11 integriert, durch die der Zwischenraum zwischen den Innenwänden 12 des Containers und der Kunststoffolie 10 mit Druck beaufschlagbar ist. Der Container 1 ist wie folgt mit Schüttgut 13 befüllbar:

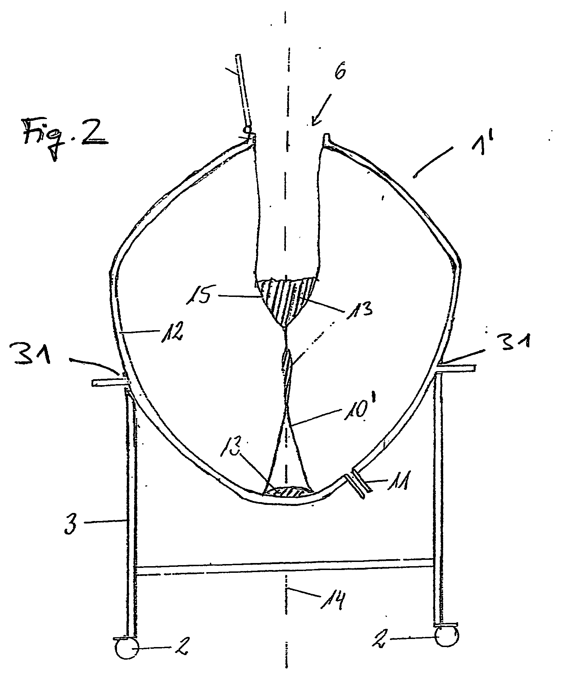

Soll der Container 1 über seinen Einlaß 6 mit Schüttgut 13, zum Beispiel in Form von Tabletten oder Dragees, befüllt werden, so wird über die Druckluftzuleitung 11 Luft in den Container 1 gepumpt, der die Kunststoffolie 10 im Bereich der axialen Containerachse 14 zwischen dem unteren Flansch 5 und dem oberen Flansch 7 zumindest bereichsweise zusammendrückt. Hierdurch wird verhindert, daß eingefülltes Schüttgut 13 über seine Schwerkraft auf den Boden des Containers 1 durchfällt und durch einen Aufprall auf den Boden beschädigt wird. Tatsächlich trifft das Schüttgut 13 auf die druckluftgepolsterte Kunststoffolie 10 unterhalb des oberen Flansches 7 auf und kommt dort zum Liegen. Durch fortwährendes Nachfördern des Schüttgutes 13 wird die Kunststoffolie 10 durch die Gewichtskraft des Schüttgutes 13 eine Art Tasche 15 ausbilden, wie in der Figur dargestellt. Sobald der Schweredruck des Schüttgutes 13 den Druck, der die Kunststoffolie 10 aufpumpt, übersteigt, wird Schüttgut 13 beginnen, sich umschlossen von der Kunststoffolie 10 in Richtung auf den Auslaß 4 zu senken. Durch eine gesteuerte Druckbeaufschlagung über die Druckluftzuleitung 11 können z.B. Parameter wie die Fallhöhe und die fallende Schüttgutmenge definiert werden. Während Fig. 1 einen Durchlaufcontainer abbildet, ist ein dem trichterförmigen Container 1 entsprechender Umkehrcontainer 1' in Fig. 2 gezeigt. Die Kunststofffolie 10' ist auf der dem Einlaß 6 gegenüberliegenden Seite des Containers 1' befestigt. Ansonsten unterscheidet sich der Aufbau des Containers 1' nicht von dem des Containers 1 gemäß Fig. 1. Zum einfacheren Entleeren des Containers können die Auflagepunkte 31 des Gestells 3 drehbar ausgestaltet sein, so daß durch einfaches Drehen des Containers 1' um 180° die Einlaßöffnung 6' zur Auslaßöffnung wird, über die der Container 1' schwerkraftgetrieben entleert werden kann.

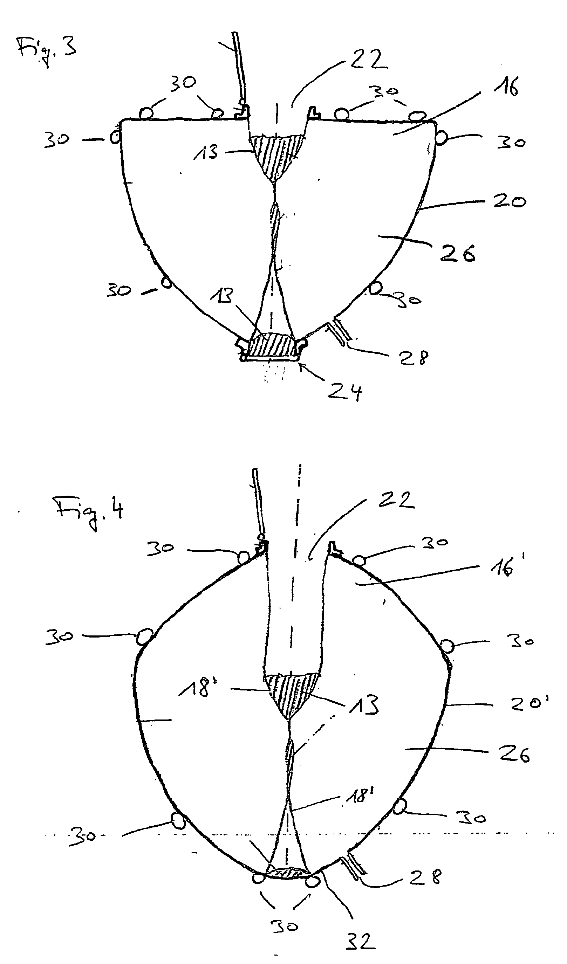

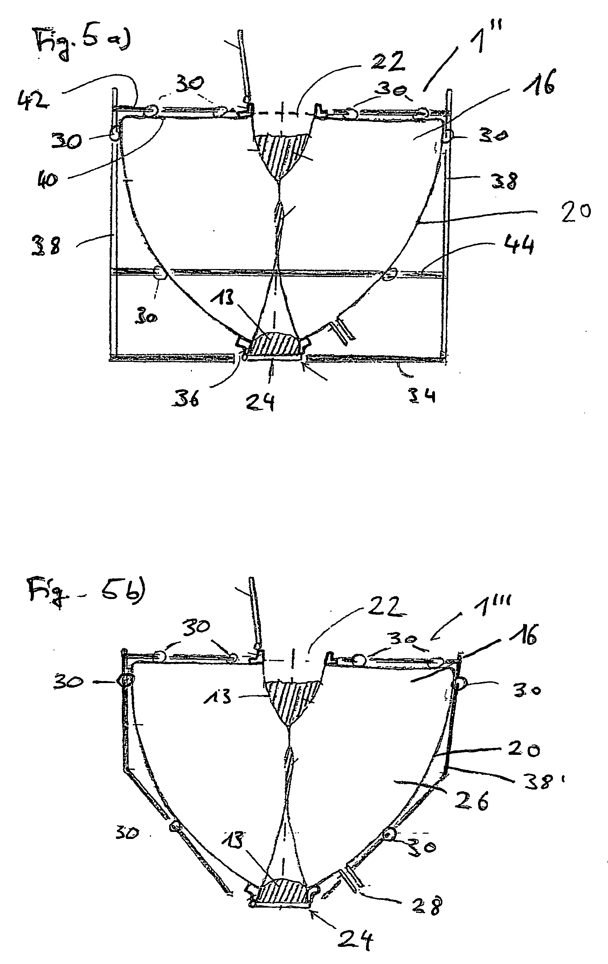

Fig. 3 zeigt ein erfindungsgemäßes Behältnis 16, umfassend eine innere Behältniswand 18 und eine äußere Behältniswand 20. Der Einlaß 22 wird durch einen Flansch gebildet, der in die äußere Behältniswand 20 eingelassen ist. Dem Einlaß 22 gegenüberliegend ist der Auslaß 24, ebenfalls gebildet durch einen Flansch, angeordnet. Im Bereich des Einlasses 22 sowie des Auslasses 24 sind die innere und äußere Behältniswand 18 bzw. 20 jeweils dicht angebracht, so daß ein luftdichter, abdichtbarer Zwischenraum 26 vorliegt. Im unteren Bereich der äußeren Behältniswand 20 ist eine Druckluftzuleitung 28 vorgesehen. Der Einlaß 20 sowie der Auslaß 24 des Behältnisses in Fig. 3 können in gleicher Weise ausgestaltet sein wie bei dem Container gemäß den Figuren 1 und 2. Ein- und Auslaß können demgemäß über eine Eintritts- bzw. Austrittsklappe, die insbesondere verschließbar ist, verfügen. Des weiteren können an der äußeren Behältniswand Schlaufen oder Ösen vorliegen oder eingesetzt sein zur beispielsweise temporären Befestigung an einem Haltegestell oder an Containerwandungen. Derartige Ösen oder Schlaufen 30 befinden sich in der Ausführungsform gemäß Fig. 3 an den Seitenwandungen sowie auf der Oberseite der äußeren Behältniswand 20. Die äußere Behältniswand 20 gemäß Fig. 3 übt im wesentlichen die gleiche Funktion aus wie die starre Innenwand 12 des Containers 1 gemäß Figuren 1 und 2. Indem der Zwischenraum 26 des Behältnisses 16 über die Druckluftzuleitung 28 mit Druckluft beaufschlagt wird, erreicht das Behältnis 16 seine maximale äußere Form, so daß der innerhalb der äußeren Behältniswand aufgebaute Druck auf die innere Behältniswand 18 wirkt. Das Behältnis 16 kann mit seinem Einlaß 22 und Auslaß 24 als Durchlaufbehältnis eingesetzt werden. Wie Figur 4 zu entnehmen ist, kann ein Behältnis 16' mit einer inneren und äußeren Behältniswand 18' bzw. 20' auch als Umkehrbehältnis ausgestaltet sein. Ein derartiges Behältnis 16' verfügt demgemäß nur noch über einen Einlaß 22, dem gleichfalls die Funktion des Auslasses zukommt. Die innere Behätniswand 18' ist an dem Einlaß 22 gegenüberliegenden Seite mit der äußeren Behältniswand verbunden. Zur leichteren Handhabung derartiger Umkehrbehältnisse hat es sich als praktikabel erwiesen, Schlaufen bzw. Ösen 30 nicht nur an den Seitenwandungen, insbesondere im unteren und oberen Bereich, sowie an der Oberseite, insbesondere im Bereich des Einlasses 22 vorzusehen, sondern ebenfalls auf der Unterseite 32, so daß das Behältnis 16' im Fall der Entleerung an diesen auf der Unterseite 32 befindlichen Schlaufen 30' mit Hilfe eines Gestells aufgehängt werden kann.

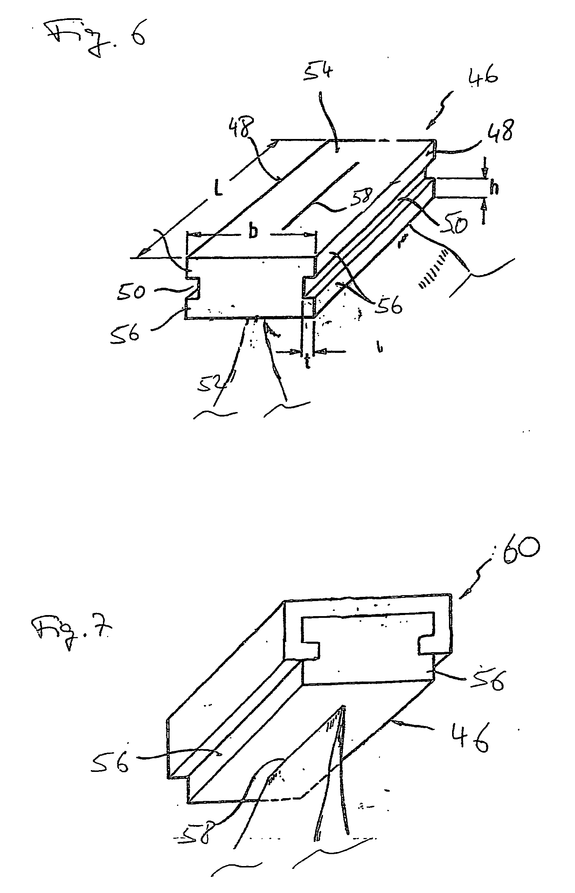

Fig. 5a) zeigt einen nicht geschlossenen Container 1", der ein Behältnis, wie in Fig. 3 dargestellt, enthält. Der Container 1" verfügt über eine Bodenplatte 34 mit einer Öffnung 36, über die bzw. in der der Auslaß 24 positionierbar ist. An den Ecken der Bodenplatte 34 befinden sich vertikale Stützelemente 38, die geeignet sind, über die an der äußeren Behältniswand 20 befindlichen Schlaufen 30 das Behältnis 16 zu fixieren. Eine weitere Fixierung der Oberseite 40 des Behältnisses 16 gelingt über an dieser Oberseite, insbesondere im Bereich des Einlasses 24 angebrachte Schlaufen 30, die an einer die Vertikalstützelemente 38 verbindenden Querverstrebung 42 (der besseren Übersicht wegen nicht vollständig durchgezeichnet) angebracht sind. Eine weitere Querverstrebung 44 zwischen der oberen Querverstrebung 42 und der Bodenplatte 34, vorzugsweise angeordnet zwischen benachbarten Vertikalstützelementen 38, trägt zur Stabilisierung des Behältnisses 16, insbesondere wenn mit Luft befüllt, bei. Die genannten Querverstrebungen bilden zusammen mit den Vertikalstützelement 38 ein Haltegerüst bzw. Haltekorsett für das Behältnis 16. Die Form der äußeren Behältniswand 20 ist selbstverständlich nicht auf die dargestellte Querschnittsform beschränkt, sondern kann beliebige Formen annehmen, z. B. die Form einer Kugel, eines Zylinders, eines Quaders, eines Würfels, eines Kegels oder einer Pyramide. Querverstrebungen 42, 44 können demgemäß auf allen Seiten des Behältnisses vorgesehen sein (nicht abgebildet). Des weiteren kann selbstverständlich auch die Form der Stützelemente 38' an die Form des Behältnisses 16 angepaßt werden, wie in Fig. 5 b) mit Container 1 "' gezeigt. Des weiteren ist es möglich, anstelle von Stützelementen oder Querverstrebungen, die z.B. ein Haltekorsett ausbilden, einen Wandflächen aufweisenden Behälter oder einen Kasten vorzusehen, in den das erfindungsgemäße Behältnis einsetzbar ist, z.B. ein konisch geformter Behälter.

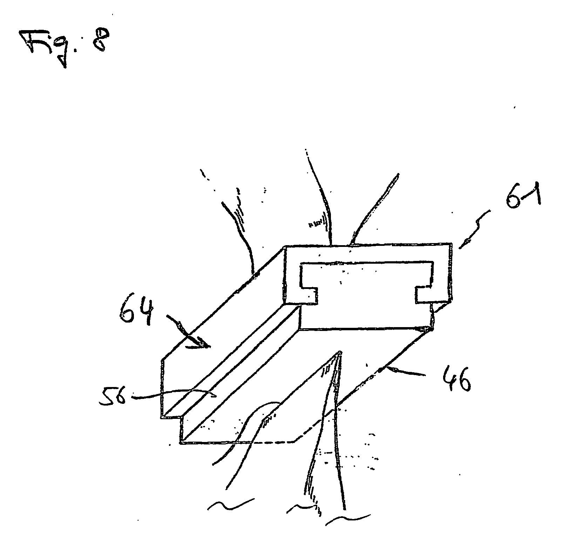

Fig. 6 zeigt den Aufbau einer Ausführungsform eines Absperrelements, bei dem es sich um ein Kopplungelements 46 in Form eines länglich ausgestalteten Elastomerkörpers, der in jeder seiner Seitenflächen 48 eine rechteckförmig ausgebildete Nut 50 aufweist. Die Nuten 50 sind in den Seitenflächen 48 derart angeordnet, daß sie sowohl von der Unterseite 52 des Elastomerkörpers zu der Nut 50 als auch von der Oberseite 54 zu der Nut 50 auf jeder Seitenfläche 48 jeweils ein Steg 56 der Höhe h und der Tiefe t ausbildet. Zentrisch zwischen den Seitenflächen ist in dem Elastomerkörper ein Schlitz 58 angebracht, der durchgängig von der Oberseite 54 zur Unterseite 52 ausgeführt ist und sich über eine Länge erstreckt, die geringer ist als die Seitenlänge des Elastomerkörpers. An dem ersten Kopplungselement 46 ist eine innere und äußere Behältniswand angebracht, wobei die oberen Bereiche der inneren und äußeren Behältniswand den durch den Schlitz 58 gebildeten Innenflächen des Elastomerkörpers verschweißt sein kann. Das erste Kopplungselement 46 ist gemäß Fig. 6 keinerlei äußeren Kräften ausgesetzt und befindet sich somit in seinem geschlossenen Zustand, in dem der Schlitz 58 dicht verschlossen ist. Wird das erste Kopplungselement 46 auf seiner Vorder- und Rückseite mit einer Kraft beaufschlagt, kommt es zu einer Öffnung des Schlitzes 58.

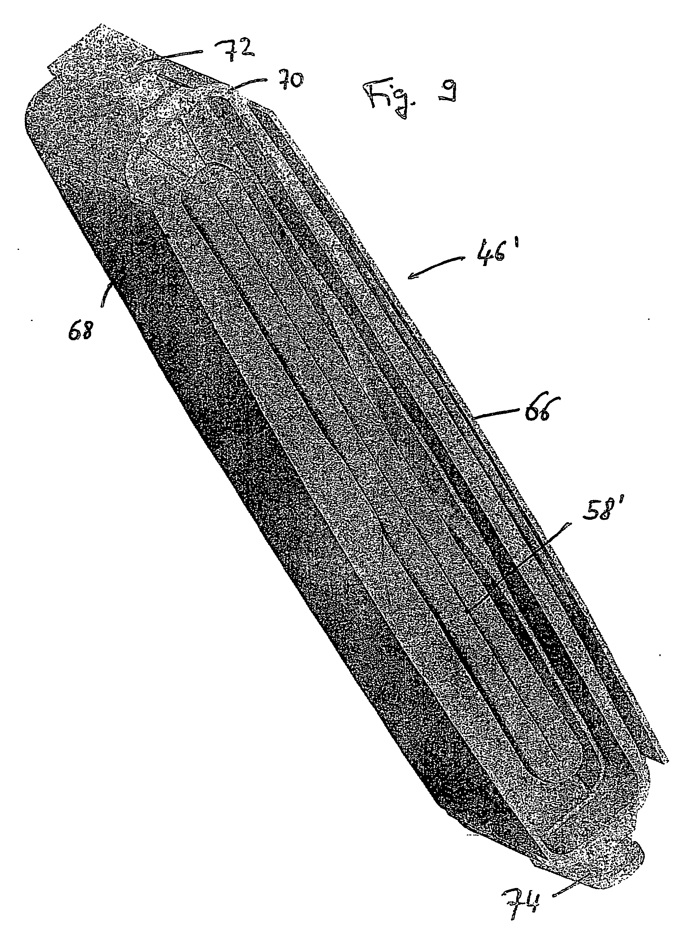

In Fig. 7 ist ein Kopplungselement 46 gezeigt, das mit einer Verschließeinrichtung in Form einer Verschlußklemme 60 zusätzlich abgedichtet ist. Die Formstabilität der Verschlußklemme 60 verhindert ein unbeabsichtigtes Öffnen des Schlitzes 58 des ersten Kopplungselementes 46.

Zum Befüllen bzw. Entleeren des Behältnisses 16, 16' bzw. eines Containers 1, 1', 1", 1"' kann ein Einlaß 6, 22 bzw. ein Auslaß 4, 24 mit einem Kopplungselement 46 versehen sein (nicht abgebildet). Soll das zu entleerende Schüttgut wiederum in ein abgeschlossenes Behältnis überführt oder soll Schüttgut aus einem Behältnis oder einer Produktionsanlage in ein erfindungsgemäßes Behältnis oder einen Erfindungsgemäßen Container überführt werden, ist es vorteilhaft, dieses weitere Behältnis bzw. die Produktionseinrichtung über ein zweites Kopplungselement 61, wie in Fig. 8 schematisch dargestellt, unter Ausbildung einer Andockeinrichtung 64 anzukoppeln. Altemativ kann auch auf Kopplungselemente 46', wie in Fig. 9 gezeigt, zurückgegriffen werden. Die an den Längssseiten angebrachten Führungsschienen 66 und 68 sind auf einem umlaufenden Rand 70 aufgesetzt. Die Schmalseiten des Kopplungselements 46' beinhalten die Fixierelemente 72 und 74. Der Schlitz 58' erstreckt sich in mittiger Ausrichtung im wesentlichen parallel zu den Längsseiten des Kopplungselements 46'. Gegenüber dem Kopplungselement 46, das an das zweite Kopplungselement 62 seitlich angedockt werden kann, eignet sich das Kopplungselement 46' zur axialen Ankopplung an ein zweites Kopplungselement 62' (nicht abgebildet).

Die in der voranstehenden Beschreibung, den Zeichnungen sowie den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Mehrwandiges Umkehrbehältnis (16') mit mindestens einer inneren (18') und einer unmittelbar oder mittelbar benachbarten äußern Behältniswand (20') sowie mit mindestens einem an der Behältnisoberseite angeordneten Einlaß (22), über den das Behältnis mit Schüttgut befüllbar ist, die innere Behältniswand (18') flexibel, luftdicht sowie insbesondere im wesentlichen schlauch- und/oder kugelförmig ist und wobei ein Zwischenraum (26) zwischen den besagten inneren und äußeren flexiblen Behältniswänden (18', 20') über mindestens eine Druckluftzuleitung (28) variierbar mit Druckluft befüllbar ist, so daß der Querschnitt der inneren Behältniswand (18') zur Reduktion der Fallgeschwindigkeit des Schüttguts vom Einlaß (22) an zumindesten bereichsweise einstellbar ist, wobei die benachbarten flexiblen Behältniswände (18', 20') im Bereich des Einlasses (22) miteinander mittelbar oder unmittelbar luftdicht verbunden sind und wobei in dem Bereich des Behältnisses, der dem Einlaß (22) gegenüber liegt, die benachbarten Behältniswände (18', 20 ") punktuell oder flächig miteinander direkt oder indirekt verbunden oder verbindbar sind und wobei sich die innere Behältniswand (18') vom Einlaß (22) bis zur dem Einlaß (22) im wesentlichen gegenüberliegenden Seite der Behältniswand, insbesondere schlauchförmig, erstreckt, **dadurch gekennzeichnet, daß**
die äußere Behältniswand (20') flexibel, luchtdicht sowie insbesondere schlauch- und/oder kugelförmig ist und daß die innere Behältniswand (18, 18') zumindest bereichsweise flexibler ist als die äußere Behältniswand (20').

2. Mehrwandiges Durchlaufbehältnis (16) mit mindestens einer inneren (18) und einer unmittelbar oder mittelbar benachbarten äußern Behältniswand (20) sowie mit mindestens einem Einlaß (22), über den das Behältnis mit Schüttgut befüllbar ist, mindestens einem dem Einlaß (22) gegenüberliegenden, verschließbaren Auslaß (24) an der Behältnisunterseite, wobei die innere Behältniswand (18) flexibel, luftdicht sowie insbesondere schlauch- und/oder kugelförmig ist und sich vom Einlaß (22) zum Auslaß (24) des Behältnisses erstreckt und der Zwischenraum (26) zwischen der inneren Behältniswand (18) und der äußeren Behältniswand (20) über mindestens eine Druckluftzuleitung (28) variierbar mit Druckluft befüllbar ist, so daß der Querschnitt der inneren Behältniswand (18) zur Reduktion der Fallgeschwindigkeit des Schüttguts von dem Einlaß (22) zu dem Auslaß (24) zumindest bereichsweise einstellbar ist, **dadurch gekennzeichnet, daß**
die äußere Behältniswand (20) flexibel, luchtdicht sowie insbesondere schlauch- und/oder kugelförmig ist und daß die innere Behältniswand (18) zumindest bereichsweise flexibler ist als die äußere Behältniswand (20,).

3. Behältnis nach Anspruch 1 oder 2, **dadurch gekennzeichnet, daß**
die innere Behältniswand eine Innenhülle und die äußere Behältniswand eine Außenhülle umfaßt.

4. Behältnis nach einen der vorrangehenden Ansprüche, **dadurch gekennzeichnet, daß** dieses über den Einlaß schwerkraftgetrieben mit Schüttgut befüllbar ist.

5. Behältnis nach einem der vorangehenden Ansprüche, **gekennzeichnet durch** mindestens eine Haltevorrichtung (30), insbesondere im oberen Bereich der Seitenwand und/oder an der Oberseite des Behältnisses.

6. Behältnis nach einem der vorangehenden Ansprüche, **dadurch gekennzeichnet, daß** die innere Behältniswand (18, 18'), insbesondere die Innenhülle, ohne Druckluft in dem Zwischenraum (26) zwischen der inneren Behältniswand und der äußeren Behältniswand dieselbe vollständig bedeckt.

7. Behältnis nach einem der vorangehenden Ansprüche, **dadurch gekennzeichnet, daß** die innere Behältniswand (18, 18') luftdicht mit dem Einlaß (22) sowie dem Auslaß (24) verbindbar ist.

8. Behältnis nach einem der vorangehenden Ansprüche, **dadurch gekennzeichnet, daß** die innere Behältniswand (18, 18') mindestens einen Kunststoff, vorzugsweise einem lebensmittelechten Kunststoff, umfaßt.

9. Behältnis nach einem der vorangehenden Ansprüche, **gekennzeichnet durch**
eine Steuer- und/oder Regeleinrichtung in Verbindung mit einer Druckluftzuleitung zu dem Zwischenraum zwischen der inneren Behältniswand und der äußeren Behältniswand.

10. Behältnis nach einem der vorangehenden Ansprüche, **gekennzeichnet durch**
zumindest einen Sensor insbesondere zur Erfassung des Füllstands und/oder der Füllgeschwindigkeit des Behältnisses, vorzugsweise in Wirkverbindung mit der Steuer- und/oder der Regeleinrichtung.

11. Behältnis nach einem der vorangehenden Ansprüche, **gekennzeichnet durch**
eine Klappenanordnung am Einlaß und/oder am Auslaß des Behältnisses, vorzugsweise in Wirkverbindung mit dem Sensor und/oder der Steuer- und/oder Regeleinrichtung.

12. Behältnis nach einem der vorangehenden Ansprüche, **dadurch gekennzeichnet, daß** mindestens ein Einlaß und/oder mindestens ein Auslaß ein Kopplungselement zum umweltisolierten Befüllen und/oder Entleeren von Behältnissen, unmittelbar oder mittelbar umfaßt, das fest oder lösbar und im wesentlichen umweltisoliert auf einer ersten Seite, insbesondere der Unterseite, mit der inneren und/oder äußeren Behältniswand, zumindest bereichsweise, verbunden oder verbindbar ist, wobei das Kopplungselement zumindest bereichsweise elastisch verformbar ist und eine zweite Seite, insbesondere eine Oberseite, aufweist, die an eine zweite Seite, insbesondere eine Oberseite, eines zweiten Kopplungselements im wesentlichen dicht und insbesondere reversibel andockbar ist, wobei das besagte Kopplungselement im Grundzustand verschlossen und unter elastischer Verformung, insbesondere über mindestens ein Schlitz, reversibel öffenbar ist, so daß ein Durchgang von der ersten zur zweiten Seite des Kopplungselements vorliegt.

13. Behältnis nach Anspruch 12, **dadurch gekennzeichnet, daß**
die Oberseite des Kopplungselements mindestens eine kontinuierlich umlaufende axiale Erhebung aufweist, die über den gesamten Umfang zur, insbesondere dichten, Anlage mit einem zweiten Kopplungselement bringbar ist.

14. Behältnis nach Anspruch 13, **dadurch gekennzeichnet, daß**
die umlaufende axiale Erhebung und eine Umrandung oder Begrenzung des öffenbaren Durchgangs oder Schlitzes auf der Oberseite des Kopplungselement zur, insbesondere dichten, Anlage mit der Oberseite eines zweiten, anzudockenden Kopplungselements, bringbar sind, wobei insbesondere zumindest die umlaufende axiale Erhebung der Oberseite des ersten Kopplungselements mit der umlaufenden axialen Erhebung der Oberseite des zweiten Kopplungselements und die Umrandung oder Begrenzung des öffenbaren Durchgangs oder Schlitzes der Oberseite des ersten Kopplungselements mit der Umrandung oder Begrenzung des öffenbaren Durchgangs oder Schlitzes der Oberseite des zweiten Kopplungselements zur, insbesondere dichten, Anlage bringbar sind.

15. Behältnis nach einem der Ansprüche 12 bis 14, **gekennzeichnet durch**
eine im wesentlichen axiale Führungseinrichtung, insbesondere einen kontinuierlich umlaufenden oder diskontinuierlichen axialen Randsteg, an der Oberseite des besagten Kopplungselements, insbesondere an der umlaufenden axialen Erhebung, zur Ausbildung eines dichten, festsitzenden und/oder arretierbaren Abschlusses mit einem andockbaren zweiten Kopplungselement.

16. Behältnis nach Anspruch 12, **gekennzeichnet durch**
zumindest eine Führungseinrichtung, umfassend mindestens eine Nut oder Aussparung oder mindestens einen Steg oder Vorsprung, insbesondere im Bereich mindestens einer die Ober- und Unterseite verbindenden Seitenfläche, zum Angreifen an ein zweites Kopplungselement und/oder eine Verschließeinrichtung.

17. Behältnis nach einem der Ansprüche 12 bis 16, **dadurch gekennzeichnet, daß** zumindest eine Seite des Kopplungselements, insbesondere die zum umweltisolierten Andocken an ein zweites Kopplungselement vorgesehene zweite Seite, wenigstens bereichsweise ein Haftmittel und/oder einen Kleber, insbesondere eine Haft- und/oder Klebeschicht, aufweist.

18. Behältnis nach einem der Ansprüche 12 bis 17, **dadurch gekennzeichnet, daß** der periphere Randbereich der Aufnahmeöffnung der inneren und/oder äußeren flexiblen Behältniswand auf der ersten Seite des Kopplungselements dicht mit dem Umfangsrand, insbesondere den im Grundzustand dich aneinander anliegenden Wandungen, des Durchgangs zumindest benachbart zur ersten Seite, mit der Fläche der ersten Seit oder mit den die erste und zweite Seite verbindenden Seiten, mit oder ohne Zuhilfenahme eines Klemmgurts oder -gummis, verbunden oder verbindbar ist.

19. Umkehrcontainer, enthaltend mindestens ein Behältnis gemäß Anspruch 1.

20. Durchlaufcontainer (1, 1"), enthaltend mindestens ein Behältnis (16) gemäß einem der Ansprüche 2 bis 18.

21. Container nach Anspruch 19 oder 20, **dadurch gekennzeichnet, daß** der Container zerlegbar, faltbar, stapelbar und/oder zusammenklappbar ist und/oder ein Haltekorsett oder eine nach oben offenen Kasten, insbesondere mit einem Durchgang zur Aufnahme eines Behältnisauslasses auf der Unterseite, darstellt.

22. Container nach einem der Ansprüche 19 bis 21, **dadurch gekennzeichnet, daß** das Behältnis, insbesondere lösbar, mit dem Container, insbesondere mindestens einer Containerwand, Containerkorsettstrebe und/oder einem vertikalen Stützelemnt (38, 38'), verbindbar ist, vorzugsweise über eine Haltevorrichtung (30) im oberen Bereich des Behältnisses.

23. Verfahren zum schonenden Befüllen von Behältnissen oder von, insbesondere nicht geschlossenen, Containern, **dadurch gekennzeichnet, daß**
man Schüttgut über mindestens einen an der Oberseite angeordneten, insbesondere verschließbaren, Einlaß einfüllt in ein mehrwandiges, eine flexible und luftdichte innere und äußere Behältniswand umfassendes Behältnis gemäß einem der Ansprüche 1 bis 18 bzw. einem Container gemäß einem der Ansprüche 19 bis 22, wobei man die Fallgeschwindigkeit und/oder Falltiefe des Schüttgutes steuert und/oder regelt, indem man einen Zwischenraum zwischen einer inneren Behältniswand und einer äußeren Behältniswand, insbesondere einer Innen- und einer Außenhülle, variierbar mit Druckluft beaufschlagt, wodurch der Querschnitt der inneren Behältniswand zur Reduktion der Fallgeschwindigkeit des Schüttguts von dem Einlaß zu der dem Einlaß gegenüberliegenden Seite des Behältnisses und/oder zu dem Auslaß zumindest bereichsweise eingestellt wird.

24. Verfahren zum Entleeren eines Behältnisses gemäß einem der Ansprüche 1 bis 18 oder eines Containers gemäß einem der Ansprüche 19 bis 22, **dadurch gekennzeichnet, daß**
man mindestens einen Auslaß und/oder Einlaß öffnet und die schwerkraftgetriebene Entleerung mittels Druckbeaufschlagung eines Zwischenraums zwischen einer inneren und einer äußeren flexiblen, luftdichten Behälterwand unterstützt.

25. Verfahren nach Anspruch 24, **dadurch gekennzeichnet, daß**
man während des schwerkraftgetriebenen Entleervorgangs den Zwischenraum zwischen der inneren und der äußeren Behältniswand periodisch, insbesondere kurzzeitig, mit Druck beaufschlagt.

26. Verfahren nach Anspruch 24, **dadurch gekennzeichnet, daß**
man gegen Ende des Entleervorgangs oder bei oder nach Beendigung des schwerkraftgetriebenen Entleervorgangs den Zwischenraum zwischen der inneren und der äußeren Behältniswand, insbesondere kurzzeitig, mindestens einmal mit Druck beaufschlagt, so daß insbesondere letzte Schüttgutreste aus dem Behältnis entfernt werden.

27. Verwendung der Behältnisse gemäß einem der Ansprüche 1 bis 18 oder der Container gemäß einem der Ansprüche 19 bis 22 zur Aufnahme, zur Abgabe, zum Transport und/oder zum Lagern von Schüttgut.

## Claims

1. Multi-walled reversible receptacle (16') with at least one inner receptacle wall (18') and one directly or indirectly adjacent outer receptacle wall (20'), and with at least one inlet (22) which is arranged on the top of the receptacle and via which the receptacle can be filled with bulk material, the inner receptacle wall (18') being flexible, airtight and in particular substantially tubular and/or spherical in shape, and a cavity (26) between said inner and outer flexible receptacle walls (18', 20') being able to be variably filled with compressed air via at least one compressed-air supply line (28), such that the cross section of the inner receptacle wall (18') can be adjusted at least in some areas in order to reduce the falling speed of the bulk material from the inlet (22), the adjacent flexible receptacle walls (18', 20') being directly or indirectly connected to one another in an airtight manner in the area of the inlet (22), and, in the area of the receptacle lying opposite the inlet (22), the adjacent receptacle walls (18', 20') are connected or can be connected directly or indirectly to one another at some points or across their full surface, and the inner receptacle wall (18'), from the inlet (22) to the side of the receptacle wall lying substantially opposite the inlet (22), extends in particular in a tubular shape, **characterized in that** the outer receptacle wall (20') is flexible, airtight and in particular tubular and/or spherical in shape, and **in that** the inner receptacle wall (18, 18') is at least in some areas more flexible than the outer receptacle wall (20').

2. Multi-walled flow-through receptacle (16) with at least one inner receptacle wall (18) and one directly or indirectly adjacent outer receptacle wall (20), and with at least one inlet (22) via which the receptacle can be filled with bulk material, with at least one closable outlet (24) lying opposite the inlet (22) on the bottom of the receptacle, the inner receptacle wall (18) being flexible, airtight and in particular substantially tubular and/or spherical in shape and extending from the inlet (22) to the outlet (24) of the receptacle, and the cavity (26) between the inner receptacle wall (18) and the outer receptacle wall (20) being able to be variably filled with compressed air via at least one compressed-air supply line (28), such that the cross section of the inner receptacle wall (18) can be adjusted at least in some areas in order to reduce the falling speed of the bulk material from the inlet (22) to the outlet (24), **characterized in that** the outer receptacle wall (20) is flexible, airtight and in particular tubular and/or spherical in shape, and **in that** the inner receptacle wall (18) is at least in some areas more flexible than the outer receptacle wall (20).

3. Receptacle according to Claim 1 or 2, **characterized in that** the inner receptacle wall comprises an inner envelope and the outer receptacle wall comprises an outer envelope.

4. Receptacle according to one of the preceding claims, **characterized in that** it can be filled with bulk material driven by gravity via the inlet.

5. Receptacle according to one of the preceding claims, **characterized by** at least one holding device (30), in particular in the upper area of the side wall and/or on the top of the receptacle.

6. Receptacle according to one of the preceding claims, **characterized in that** the inner receptacle wall (18, 18'), in particular the inner envelope, without compressed air in the cavity (26) between the inner receptacle wall and the outer receptacle wall, completely covers the latter.

7. Receptacle according to one of the preceding claims, **characterized in that** the inner receptacle wall (18, 18') can be connected in an airtight manner to the inlet (22) and to the outlet (24).

8. Receptacle according to one of the preceding claims, **characterized in that** the inner receptacle wall (18, 18') comprises at least one plastic, preferably a food-compatible plastic.

9. Receptacle according to one of the preceding claims, **characterized by** a controlling and/or regulating device in combination with a compressed air supply line to the cavity between the inner receptacle wall and the outer receptacle wall.

10. Receptacle according to one of the preceding claims, **characterized by** at least one sensor in particular for determining the filling level and/or the filling speed of the receptacle, preferably in operative connection with the controlling and/or regulating device.

11. Receptacle according to one of the preceding claims, **characterized by** a flap arrangement at the inlet and/or at the outlet of the receptacle, preferably in operative connection with the sensor and/or with the controlling and/or regulating device.

12. Receptacle according to one of the preceding claims, **characterized in that** at least one inlet and/or at least one outlet directly or indirectly comprises a coupling element for filling and/or emptying of receptacles in a manner isolated from the environment, which coupling element is connected or can be connected permanently or releasably and in a substantially environmentally isolated manner on a first side, in particular the bottom, to the inner and/or outer receptacle wall, at least in some areas, the coupling element being elastically deformable at least in some areas and having a second side, in particular a top, which can be docked substantially tightly and in particular reversibly onto a second side, in particular a top, of a second coupling element, said coupling element being closed in the base state and being able to be reversibly opened under elastic deformation, in particular via at least one slit, so that a passage is present from the first side to the second side of the coupling element.

13. Receptacle according to Claim 12, **characterized in that** the top of the coupling element has at least one continuously circumferential axial elevation which, about the entire circumference, can be brought into engagement, in particular tight engagement, with a second coupling element.

14. Receptacle according to Claim 13, **characterized in that** the peripheral axial elevation and a border or limit of the openable passage or slit on the top of the coupling element can be brought into engagement, in particular tight engagement, with the top of a second coupling element to be docked thereon, in particular at least the circumferential axial elevation of the top of the first coupling element being able to be brought into engagement, in particular tight engagement, with the circumferential axial elevation of the top of the second coupling element, and the border or limit of the openable passage or slit of the top of the first coupling element being able to be brought into engagement, in particular tight engagement, with the border or limit of the openable passage or slit of the top of the second coupling element.

15. Receptacle according to one of Claims 12 to 14, **characterized by** a substantially axial guide device, in particular a continuously circumferential or discontinuous axial edge web, on the top of said coupling element, in particular on the circumferential axial elevation, for forming a tight, secure and/or arrestable closure with a dockable second coupling element.

16. Receptacle according to Claim 12, **characterized by** at least one guide device, comprising at least one groove or cutting or at least one web or projection, in particular in the area of at least a side face connecting the top and bottom, for engagement on a second coupling element and/or a closure device.

17. Receptacle according to one of Claims 12 to 16, **characterized in that** at least one side of the coupling element, in particular the second side provided for environmentally isolated docking to a second coupling element, has at least in some areas an adhesive agent and/or a bonding agent, in particular an adhesive layer and/or bonding layer.

18. Receptacle according to one of Claims 12 to 17, **characterized in that** the peripheral edge area of the receiving opening of the inner and/or outer flexible receptacle wall is tightly connected or can be tightly connected on the first side of the coupling element to the circumferential edge, in particular the walls bearing tightly on one another in the base state, of the passage at least adjacent to the first side, to the surface of the first side or to the sides connecting the first and second sides, with or without the aid of a clamping strap or rubber.

19. Reversible container, containing at least one receptacle according to Claim 1.

20. Flow-through container (1, 1"), containing at least one receptacle (16) according to one of Claims 2 to 18.

21. Container according to Claim 19 or 20, **characterized in that** the container is dismantlable, foldable, stackable and/or collapsible and/or represents a retaining corset or an upwardly open box, in particular with a passage for receiving a receptacle outlet on the underside.

22. Container according to one of Claims 19 to 21, **characterized in that** the receptacle can be connected, in particular releasably, to the container, in particular to at least one container wall, container corset strut and/or a vertical support element (38, 38'), preferably via a holding device (30) in the upper area of the receptacle.

23. Method for careful filling of receptacles or of containers, in particular non-closed containers, **characterized in that** bulk material is introduced, via at least one inlet, in particular a closable inlet, arranged on the top, into a multi-walled receptacle, according to one of claims 1 to 18 comprising a flexible and airtight inner and outer receptacle wall, or into a container according to one of Claims 19 to 22, the falling speed and/or falling depth of the bulk material being controlled and/or regulated by means of a cavity between an inner receptacle wall and an outer receptacle wall, in particular an inner envelope and an outer envelope, being variably subjected to compressed air, as a result of which the cross section of the inner receptacle wall is adjusted for reduction of the falling speed of the bulk material from the inlet to the side of the receptacle opposite from the inlet and/or to the outlet, at least in some areas.

24. Method for emptying of a receptacle according to one of Claims 1 to 18, or of a container according to one of Claims 19 to 22, **characterized in that** at least one outlet and/or inlet is opened, and the emptying, driven by gravity, is supported by applying pressure to a cavity between an inner and an outer flexible, airtight receptacle wall.

25. Method according to Claim 24, **characterized in that**, during the emptying procedure driven by gravity, pressure is applied to the cavity between the inner and the outer receptacle wall periodically, in particular for a short time.

26. Method according to Claim 24, **characterized in that** towards the end of the emptying procedure, or at or after completion of the emptying procedure driven by gravity, pressure is applied at least once, in particular for a short time, to the cavity between the inner and the outer receptacle wall, so that, in particular, final remains of bulk material are removed from the receptacle.

27. Use of the receptacles according to one of Claims 1 to 18 or of the containers according to one of Claims 19 to 22, for the charging, discharging, transport and/or storage of bulk material.

## Revendications

1. Contenant retournable (16') à plusieurs parois comprenant au moins une paroi de contenant (18') et une paroi de contenant extérieure (20') directement ou indirectement voisine, ainsi qu'avec au moins une admission (22) disposée sur la face supérieure de contenant, par l'intermédiaire de laquelle le contenant peut être rempli de produit en vrac, la paroi intérieure de contenant (18') étant flexible, étanche à l'air, ainsi qu'en particulier sensiblement en forme de tuyau et/ou de sphère, et où un espace intermédiaire (26), entre lesdites parois de contenant intérieure et extérieure (18'20') flexibles, peut être rempli, de façon variable, en air comprimé, par l'intermédiaire d'au moins une conduite d'alimentation en air comprimé (28), de manière que la section transversale de la paroi intérieure de contenant (18') soit réglable, au moins par zones, dans le but de réduire la vitesse de chute du produit en vrac, depuis l'admission (22), les parois de récipient (18',20') flexibles voisines dans la zone de l'admission (22) étant reliées ensemble, indirectement ou directement, de façon étanche à l'air et où, dans la zone du contenant, qui est située à l'opposée de l'admission (22), les parois de contenant (18',20") flexibles sont reliées ou susceptibles d'être reliées ensemble, indirectement ou directement, de façon ponctuelle ou en surface, et où la paroi intérieure de contenant (18'), s'étend, en particulier en forme de tuyau, depuis l'admission (22) jusqu'à la face de paroi de contenant, sensiblement opposée à l'admission (22), **caractérisé en ce que**
la paroi extérieure de contenant (20') est flexible, étanche à l'air, ainsi qu'en particulier en forme de tuyau et/ou de sphère, et **en ce que** la paroi intérieure du contenant (18,18') est plus flexible, au moins par zones, que la paroi extérieure de contenant(20').

2. Contenant à passage (16) à plusieurs parois, comprenant au moins une paroi intérieure de contenant (18) et une paroi extérieure de contenant (20) directement ou indirectement, voisines, ainsi qu'avec au moins une admission (22) par laquelle le contenant est susceptible d'être rempli de produit en vrac, avec au moins une évacuation (24) obturable, opposée à l'admission (22), évacuation située sur la face inférieure de contenant, sachant que la paroi intérieure de contenant (18') est flexible, étanche à l'air, ainsi qu'en forme de tuyau et/ou de sphère et s'étend depuis l'admission (22) vers les évacuations (24) du contenant, et l'espace intermédiaire (26), entre la paroi intérieure de contenant (18) et la paroi extérieure de contenant (20), est susceptible d'être rempli de façon variable en air comprimé, par l'intermédiaire d'au moins une conduite d'alimentation en air comprimé (28), de manière que la section transversale de la paroi intérieure de contenant (18) soit réglable, au moins par zones, dans le but de réduire la vitesse de chute du produit en vrac, de l'admission (22) à l'évacuation (24), **caractérisé en ce que**
la paroi extérieure de contenant (20) est flexible, étanche à l'air, ainsi qu'en particulier en forme de tuyau et/ou de sphère, et **en ce que** la paroi intérieure de contenant (18) est plus flexible, au moins par zones, que la paroi extérieure de contenant (20).

3. Contenant selon la revendication 1 ou 2, **caractérisé en ce que** la paroi intérieure de contenant comprend une gaine intérieure et la paroi extérieure de contenant comprend une gaine extérieure.

4. Contenant selon l'une des revendications précédentes, **caractérisé en ce que** celui-ci est susceptible d'être rempli au produit en vrac sous l'effet de la force de la gravité, en passant par l'admission.

5. Contenant selon l'une des revendications précédentes, **caractérisé par** au moins un dispositif de maintien (30), en particulier dans la zone supérieure de la paroi latérale et/ou sur la face supérieure du contenant.

6. Contenant selon l'une des revendications précédentes, **caractérisé en ce que** la paroi intérieure de contenant (18,18'), en particulier la gaine intérieure, sans air comprimé dans l'espace intermédiaire (26), entre la paroi intérieur de contenant et la paroi extérieure de contenant, couvre celle-ci complètement.

7. Contenant selon l'une des revendications précédentes, **caractérisé en ce que** la paroi intérieure de contenant (18,18') est susceptible d'être reliée de façon étanche à l'air à l'admission (22), ainsi qu'à l'évacuation (24).

8. Contenant selon l'une des revendications précédentes, **caractérisé en ce que** la paroi intérieure de contenant (18,18') comprend au moins une matière synthétique, de préférence une matière synthétique convenant pour les produits alimentaires.

9. Contenant selon l'une des revendications précédentes, **caractérisé par** un dispositif de commande et/ou de régulation, en liaison avec une conduite d'alimentation en air comprimé vers l'espace intermédiaire, situé entre la paroi intérieure de contenant et la paroi extérieure de contenant.

10. Contenant selon l'une des revendications précédentes, **caractérisé par** au moins un capteur, en particulier pour détecter le niveau de remplissage et/ou la vitesse de remplissage du contenant, de préférence en coopération avec le dispositif de commande et/ou de régulation.

11. Contenant selon l'une des revendications précédentes, **caractérisé par** un dispositif à clapet à l'admission et/ou à l'évacuation du contenant, de préférence en liaison fonctionnelle avec le capteur et/ou le dispositif de commande et/ou de régulation.

12. Contenant selon l'une des revendications précédentes, **caractérisé en ce qu'**au moins une admission et/ou au moins une évacuation comprend/comprennent un élément de couplage pour effectuer un remplissage et/ou un vidage, isolé de l'environnement, de contenants, directement ou indirectement, relié ou susceptibles d'être relié, au moins par zones, rigidement ou de façon désolidarisable et de façon sensiblement isolée vis-à-vis de l'environnement sur une première face, en particulier la face inférieure, à la paroi intérieure et/ou à la paroi extérieure de contenant, l'élément de couplage étant au moins déformable élastiquement au moins par zones et présentant une deuxième face, en particulier une face supérieure, susceptible d'être accostée de façon sensiblement étanche et, en particulier, réversible sur une deuxième face, en particulier une face supérieure d'un deuxième élément de couplage, ledit élément de couplage étant, à l'état de base fermé, et étant ouvrable de façon réversible avec une déformation élastique et, en particulier, par l'intermédiaire d'au moins une fente, faisant qu'un passage est créé de la première à la deuxième face de l'élément de couplage.

13. Contenant selon la revendication 12, **caractérisé en ce que**
la. face supérieure de l'élément de couplage présente au moins un relief axial s'étendant de façon continue, susceptible d'être mis en appui, en particulier étanche, avec un deuxième élément de couplage, sur toute la périphérie.

14. Contenant selon la revendication 13, **caractérisé en ce que**
le relief axial de pourtour et un entourage, ou une limitation du passage ou de la fente ouvrable en face supérieure de l'élément de couplage, sont susceptibles d'être placés en appui, en particulier étanche, avec la face supérieure d'un deuxième élément de couplage, à placer en accostage, en particulier au moins le relief axial de pourtour de la face supérieure du premier élément de couplage étant susceptible d'être mis en appui avec le relief axial de pourtour de la face supérieure du deuxième élément de couplage, et l'entourage ou la limitation du passage ou de la fente ouvrable de la face supérieure du premier élément de couplage étant susceptible d'être mis en appui, en particulier étanche, avec l'entourage ou la limitation du passage ou de la fente ouvrable de la face supérieure du deuxième élément de couplage.

15. Contenant selon l'une des revendications 12 à 14, **caractérisé par**
un dispositif de guidage sensiblement axial, en particulier une nervure de bordure axiale continue, faisant le pourtour ou discontinue, en face supérieure dudit élément de couplage, en particulier sur le relief axial de pourtour, dans le but de créer une fermeture étanche à placement ferme et/ou blocable avec un deuxième élément de couplage accostable.

16. Contenant selon la revendication 12, **caractérisé par**
au moins un dispositif de guidage, comprenant au moins une rainure ou un évidemment, ou au moins une nervure ou une saillie, en particulier dans la zone d'au moins une face latérale reliant la face supérieure et la face inférieure, pour agir sur un deuxième élément de couplage et/ou un dispositif de fermeture.

17. Contenant selon l'une des revendications 12 à 16, **caractérisé en ce qu'**au moins une face de l'élément de couplage, en particulier la deuxième face prévue pour effectuer un accostage, isolé de l'environnement, à un deuxième élément de couplage, présente, au moins par zones, un moyen d'adhésion et/ou une colle, en particulier une couche d'adhésion et/ou de colle.

18. Contenant selon l'une des revendications 12 à 17, **caractérisé en ce que** la zone de bordure périphérique de l'ouverture de réception de la paroi intérieure et/ou extérieure de contenant flexible, sur la première face de l'élément de couplage, est reliée ou susceptible d'être reliée de façon étanche au bord périphérique, en particulier aux parois en appui étanche les unes sur les autres à l'état de base du passage, au moins au voisinage d'une première face, avec la face de la première face et/ou avec les faces reliant la première et la deuxième face, avec ou sans l'aide d'une sangle ou d'un élastique de serrage.

19. Conteneur retournable contenant au moins un contenant selon la revendication 1.

20. Conteneur à passage (1,1"), contenant au moins un contenant (16) selon les revendications 2 à 18.

21. Conteneur selon la revendication 19 ou 20, **caractérisé en ce que** le conteneur est décomposable, pliable, empilable et/ou repliable et/ou constitue un corset de maintien ou bien une caisse ouverte vers le haut, en particulier avec un passage pour recevoir une évacuation de contenant en face inférieure.

22. Conteneur selon l'une des revendications 19 à 21, **caractérisé en ce que** le contenant est susceptible d'être relié, en particulier de façon désolidarisable, au conteneur, en particulier d'au moins une paroi de conteneur, une entretoise de corset de conteneur et/ou un élément de soutien (38,38') vertical, de préférence par l'intermédiaire d'un dispositif de maintien (30) situé dans la zone supérieure du contenant.

23. Procédé de remplissage avec ménagement de contenants ou de conteneurs, en particulier non fermés, **caractérisé en ce que** l'on remplit en produit en vrac, par l'intermédiaire d'au moins une admission disposée en face supérieure, en particulier obturable, dans un contenant à plusieurs parois, comprenant une paroi de contenant intérieure et une paroi de contenant extérieure flexibles et étanche à l'air, selon l'une des revendications 1 à 18 ou un conteneur selon l'une des revendications 19 à 22, sachant que l'on commande et/ou l'on régle la vitesse de chute et/ou la profondeur du chute de produit en vrac, en sollicitant de façon variable, avec de l'air comprimé, un espace intermédiaire, situé entre une paroi intérieure de contenant et une paroi extérieure de contenant, en particulier une gaine intérieure et une gaine extérieure, faisant que la section transversale de la paroi intérieure de contenant est réglée, au moins par zones, dans le but de réduire la vitesse de flux du produit, en vrac de l'admission à la face, opposée à l'admission, du contenant, et/ou vers l'échappement.

24. Procédé de vidage d'un contenant selon l'une des revendications 1 à 18 ou d'un conteneur selon l'une des revendications 19 à 22, **caractérisé en ce qu'**au moins une évacuation et/ou une admission s'ouvrent, et le vidage, se faisant sous l'effet de la force de l'apesanteur, est assisté par une sollicitation, à l'air comprimé, d'un espace intermédiaire existant, entre une paroi intérieure de contenant et une paroi extérieure de contenant flexibles, étanche à l'air.

25. Procédé selon la revendication 24, **caractérisé en ce que**, pendant le processus de vidage, se faisant sous l'effet de la force de la pesanteur, on sollicite périodiquement, en particulier brièvement, par de l'air comprimé, l'espace intermédiaire existant, entre la paroi intérieure de contenant et la paroi extérieure de contenant.

26. Procédé selon la revendication 24, **caractérisé en ce que** vers la fin du processus du vidage, ou lors de l'achèvement ou après achèvement du processus de vidage se faisant sous l'effet de la force de la pesanteur, on sollicite, en particulier brièvement, au moins une fois en pression l'espace intermédiaire existant, entre la paroi intérieure de contenant et la paroi extérieure de contenant, faisant que, en particulier, des derniers restes de produit en vrac soient éliminés du contenant.

27. Utilisation des contenants selon l'une des revendications 1 à 18, ou des conteneurs selon l'une des revendications 19 à 22, pour recevoir, délivrer, transporter et/ou stocker du produit en vrac.
